# EUROPEAN PATENT APPLICATION

(11) **EP 1 707 594 A1**
(43) Date of publication of application: **04.10.2006**
(21) Application number: 05007034.1
(22) Date of filing: 31.03.2005
(51) Int. Cl.: C08K 3/22, C08K 3/00, C08L 67/06

(54) **Gelcoat compositions**

(71) Applicant: Cytec Surface Specialties Austria GmbH, 8402 Werndorf (AT)
(72) Inventor: Fröhlich, Gerd, Dr., 8047 Graz (AT); Hubmann, Dietmar, 8410 Wildon (AT); Jaritz, Josef, 8051 Graz (AT)
(74) Representative: Deckers, Hellmuth Alexander

(57) **Abstract**

Gelcoat formulations comprising an unsaturated polyester resin, and at least one of alumina based fillers and a coloured inorganic pigment

## Description

This invention relates to gelcoat formulations, especially those that can be used for swimming pools.

In mouldings made of fibre reinforced unsaturated polyester, a smooth surface is usually obtained by applying onto the moulded body a finishing coating composition that is free of fibres, has good levelling and de-aerating properties and helps to avoid segregation of fillers and pigments. The top layer usually has a glossy and even appearance, and imparts a uniform colouring. The coating compositions are generally known as gelcoats.

In contact with water or especially, chlorinated water, gelcoat layers often suffer from discolouration and chalking. Many attempts have been made to improve the resistance of these gelcoat layers against the combined action of light (sunlight), water and chlorine while preserving the application properties mentioned supra.

Usually, gelcoat formulations comprise talc as a filler. Talc has the favourable property of facilitating the release of trapped air within the coating composition, due to its platelike microstructure, and to reduce chlorine bleaching. It also effectively impedes segregation of resin and pigments, and it is a low cost material. For these reasons, talc has always been the filler of choice. The only major drawback found is that it changes its refractive index by absorption of water, leading to opacity and brightening under the prolonged action of humidity and water.

An improvement has been introduced by replacing the talc with an organically coated variant, such as wax coated talc.

This has improved somewhat water brightening and also chlorine bleaching. Air release and pigment segregation suppression are unimpaired. One property that still needs improvement, however, is chlorine bleaching at elevated temperatures, as usually measured by action of calcium hypochlorite solution at 60 °C over 16 hours. Though water brightening has been improved, it still shows especially in swimming pools applications, and has become less accepted by the customers.

Therefore, a new effort has been made to reduce this unwanted discolouration.

In the series of experiments that have led to the present invention, it has been found that certain coloured inorganic pigments, particularly oxidic pigments, preferably of the spinel type, and especially preferred those based on cobalt aluminium spinels and those based on cobalt chromium aluminium spinels offer high colour stability even in the presence of chlorine, and under exposure to UV light and elevated temperature. Depending on the particle size and doping, a variety of shades such as from China Blue to Cyan Blue are available. When reference is made to "coloured pigments" in this context, this is meant to designate pigments other than white pigments.

In combination with organically coated talc, markedly improved colour stability results have been obtained, while water brightening was deteriorated.

Further experiments have shown that a combination of spinels with an alternative filler, viz. aluminium oxide based fillers, have both low water brightening as well as improved chlorine bleaching properties both at ambient temperature and elevated temperature. When reference is made to "aluminium oxide based fillers" in this context, this is meant to designate such particulate inorganic compounds that comprise both aluminium and oxygen atoms.

It is therefore an object of the invention to provide a gelcoat composition that shows decreased water brightening compared with the formulations of the state of the art. Another object of the invention is to provide a gelcoat composition that has low chlorine bleaching both at ambient and at elevated temperatures. Another object of the invention is to retain the favourable de-aerating properties of the formulations of the state of the art.

In accordance with these objects, gelcoat compositions are provided which comprise spinels as oxidic inorganic pigments, in addition to unsaturated polyester and copolymerisable low molar mass compounds.

In accordance with these objects, further gelcoat compositions are provided which comprise aluminium oxides as fillers, in addition to unsaturated polyester and copolymerisable low molar mass compounds.

In accordance with these objects, still further gelcoat compositions are provided which comprise both spinels as oxidic pigments and aluminium oxides as fillers, in addition to unsaturated polyester and copolymerisable low molar mass compounds.

In a preferred embodiment, cobalt spinels are used which correspond to the formula CoₓAl_{y}O_{z}, where x is from 0.6 to 1.8, y is from 1.7 to 2.2, and z is from 3.8 to 4.2. In another preferred embodiment, cobalt spinels are used which correspond to the formula CoₓAl_{y}M_{w}O_{z}, where x is from 0.6 to 1.3, and y is from 1.8 to 2.2, and M stands for one or more elements that can substitute either cobalt or aluminium in a spinel lattice, and w is from 0 to 0.6, divided by the average valence of the element M. Depending on the kind and quantity of such additional elements M, the colour of the pigment may be varied according to the preference, in a known manner. Preferred metals M are selected from the group consisting of chromium, nickel, iron and copper. It is also possible to replace A1 in the formulae supra partly or totally by at least one of titanium, zinc, nickel, and lithium. Additionally, the colour of the pigment may also be controlled by the particle size of the pigment used. The average particle size is preferably from 0,1 µm to 5 µm, particularly preferred from 0.2 µm to 4 µm, and especially preferred, from 0.25µm to 3 µm.

In a further preferred embodiment, the aluminium oxide based fillers are preferably selected from the group consisting of the naturally occurring or synthetic minerals boehmite, kaolinite, corundum, aluminium trihydroxide, aluminium silicates, especially mica varieties such as muscovite, and lepidolite, boehmite being particularly preferred. The particle size is preferably from 0.2 µm to 3 µm, particularly preferred from 0.3 µm to 2.5 µm, and especially preferred, from 0.4 µm to 2 µm.

The invention is further illustrated by the following examples.

When mention is made of the acid number, this is defined according to DIN ENISO 3682 (DIN 53 402) as the ratio of the mass *m*_{KOH} of potassium hydroxide which is needed to neutralise the sample under examination, and the mass *m*_{B} of the said sample (mass of solids in the sample for a solution or dispersion); the customary unit is "mg/g".

### Example 1

A gelcoat master resin was produced by cocondensation of neopentyl glycol, isophthalic acid, and maleic anhydride according to the following procedure: 4.214 kg of 90 % neopentyl glycol (the rest is water), 3.0 kg of isophthalic acid and 1 kg of xylene were charged into a vessel equipped with heating, stirring, a distillation column, a cooler, and a dephleg mator, heated to 205 °C under stirring, and freed of the water formed by esterification by azeotropic distillation and separation of the aqueous layer in the dephlegmator and recycling the xylene into the vessel. When the acid number had fallen to below 10 mg/g, 1.74 kg of maleic anhydride were added in liquid from, and esterification was continued with separation of the water formed until the acid number had fallen below 15 mg/g. Residual xylene was then removed by distillation under reduced pressure. The reaction mixture was allowed to cool to 140 °C, and 5.115 kg of styrene containing 0.41 g of commercial grade hydroquinone were added under stirring. Further 1.4 g of hydroquinone were added, and the mass fraction of solids was adjusted to 58 % by adding a further quantity of 392 g of styrene. 13 kg of a viscous solution (1200 mPa·s at room temperature and a shear rate of 100 s⁻¹) of an unsaturated polyester resin dissolved in styrene were obtained.

### Example 2 Paste Resin

3.32 kg of diethylene glycol, 4.0 kg of 2-ethyl hexanol and 4.0 kg of maleic acid anhydride together with 1 kg of xylene were charged into a vessel equipped with heating, stirring, a distillation column with cooler, and a dephlegmator, heated to 205 °C under stirring, and freed of the water formed by esterification by separating the aqueous layer in the dephlegmator and recycling the xylene into the vessel. When the acid number had fallen to below 15 mg/g, residual xylene was removed by distillation under reduced pressure, and the reaction mixture was allowed to cool to ambient temperature, and 1.6 g of commercial grade hydroquinone were then added under stirring. Further 200 g of 2-ethyl hexanol were added. 10.2 kg of a solution of an unsaturated polyester resin having a viscosity of approximately 500 mPa·s (under the same measuring conditions as mentioned supra) were obtained.

### Example 3 White Pigment Paste

6.5 kg of titanium dioxide pigment (grade R-HD 2 obtained from Tioxide Europe Inc., average particle size 1 µm) and 3.5 kg of the paste resin of Example 2 were intimately mixed in a dissolver for one hour at room temperature (23 °C). 10 kg of a homogeneous viscous mass were obtained.

### Example 4 Organic Pigment Paste Compositions

### 4.1 Blue Pigment Paste

800 g of the paste resin of Example 2 were intimately mixed in a roll mill with 200 g of a blue copper phthalocyanine pigment (®Heliogenblau 7072 D, bulk density: 250 kg/m³, BASF AG) for one hour at room temperature. 1 kg of a homogeneous viscous mass were obtained.

### 4.2 Green Pigment Paste

800 g of the paste resin of Example 2 were intimately mixed in a roll mill with 200 g of a green copper phthalocyanine pigment (®Hostaperm Green GG01, Clariant Deutschland GmbH, average particle size of primary particles: 65 nm) for one hour at room temperature. 1 kg of a homogeneous viscous mass were obtained.

### 4.3 Magenta Pigment Paste

900 g of the paste resin of Example 2 were intimately mixed in a roll mill with 100 g of a magenta (reddish violet) quinacridone pigment (®Hostaperm Pink E, Clariant Deutschland GmbH, average particle size of primary particles: 90 nm) for one hour at room temperature. 1 kg of a homogeneous viscous mass were obtained.

### 4.4 Blue Organic Pigment Paste Mixture

A blue pigment mixture was prepared by intimately mixing 520 g of the blue paste of Example 4.1, 14 g of the green paste of Example 4.2, and 466 g of the magenta pigment paste of Example 4.3.

### Example 5 Inorganic Pigment Paste Compositions

### 5.1 Royal Blue Pigment Paste

500 g of the paste resin of Example 2 were intimately mixed in a roll mill with 500 g of a blue cobalt spinel pigment (® Sicopal Blue K 6210, BASF AG, bulk density: 500 kg/m³) for one hour at room temperature. 1 kg of a homogeneous viscous mass were obtained.

### 5.2 Greenish Blue Pigment Paste

500 g of the paste resin of Example 2 were intimately mixed in a roll mill with 500 g of a greenish blue cobalt chromium spinel pigment (® Sicopal Blue K 7210, BASF AG, bulk density: 500 kg/m³) for one hour at room temperature. 1 kg of a homogeneous viscous mass were obtained.

### 5.3 Blue Inorganic Pigment Paste Mixture

117 g of the blue pigment paste of Example 5.1 and 883 g of the greenish blue pigment paste of Example 5.2 were intimately mixed.

### Example 6 Formulation of gelcoats

The following gelcoat compositions were prepared, according to the details as stated in table 1:
Gelcoat 1, according to the state of the art, using the white pigment paste of Example 3, talc as a filler, and the organic blue pigment paste mixture of Example 4.4.
Gelcoat 2, according to the invention, using the white pigment paste of Example 3, talc as a filler, and the inorganic blue pigment paste mixture of Example 5.3,
Gelcoat 3, according to the invention, using the white pigment paste of Example 3, an alumina filler, and the inorganic blue pigment paste mixture of Example 5.3.

The quantities of pigment paste were in all cases adjusted to yield a uniform colouring, brightness and hue.

**Table 1 Preparation of Gelcoats**

| Component | Gelcoat 1 | Gelcoat 2 | Gelcoat 3 |
|---|---|---|---|
| Master Resin (Example 1) | 61.6 | 60.4 | 56.3 |
| Styrene | 15.8 | 15.4 | 22.3 |
| Fumed Silica (® Aerosil A 200, Degussa AG) | 2.6 | 2.5 | 2.5 |
| Inhibitor (Toluhydroquinone) | 0.03 | 0.03 | 0.03 |
| Accelerator (cobalt octoate) | 0.4 | 0.4 | 0.3 |
| Talc (grade A7, Naintsch Mineralwerke GmbH) | 11.1 | 10.8 | |
| Alumina Filler (® Apyral AOH 180, Nabaltec GmbH) | | | 8.4 |
| White Pigment Paste (Example 3) | 7.9 | 8.9 | 8.9 |
| Blue Organic Pigment Paste (Example 4.4) | 0.1 | | |
| Blue Inorganic Pigment Paste (Example 5.3) | | 0.9 | 0.9 |

### Testing of gelcoats:

Test specimens were prepared as follows:
A glass plate of 10 cm x 20 cm was coated with a release agent (PAT-607/FB, Würtz). The gelcoat preparations were mixed with methylethylketone peroxide (® Butanox M-50, Akzo Nobel N.V., 2 g of peroxide per 100 g of the mixture) and a 1000 µm layer of the mixture was applied to the glass plates. After initial curing of the gelcoat layer for about one hour, a laminate composing two layers of glass fibre mats (Ahlstrom, M601/450) which had been impregnated with a commercial vinylester resin (® Viapal UP 4834 BT/66, with addition of a mass fraction of 2 % of peroxide curing agent) was placed on top of the gelcoat layer, the stack then being covered with a sheet of polyethylene film. After completion of curing for two further hours, the composite was tempered in an oven at 70 °C for sixteen hours, removed from the glass plate and cut to test specimens of 5 cm x 14 cm.

### Chlorine Test:

Before testing, the colour (CIELAB* scale) of the test specimens is recorded. The specimens are then subj ected to the test solution in a glass flask (0,5 g of calcium hypochlorite dissolved in 11 of deionised water, pH adjusted to 6.5 by addition of hydrochloric acid) and stored for sixteen hours at 60 °C. The test specimen is then removed, rinsed and dried, and stored at room temperature (20 °C) for one hour before measuring the colour again. Discolouration ΔE_{Cl} is measured as usual as the root mean square of the differences ΔL*, Δa*, and Δb* in the values L*, a*, and b*: ΔE_{Cl} = (ΔL*² + Δa*² + Δb*²)^{½}.

### Water Test:

Before testing, the colour (CIELAB* scale) of the test specimens is recorded. The specimens are then subjected to deionised water in a glass flask and stored for seven days at 60 °C. The test specimen is then removed and dried, and stored at room temperature (20 °C) for one hour before measuring the colour again. Discolouration ΔE_{w} is measured as usual as the root mean square of the differences ΔL*, Δa*, and Δb* in the values. L*, a*, and b*: ΔE_{w} = (ΔL*² + Δa*² + Δb*²)^{½}.

### Accelerated Weathering Test:

Before testing, the gloss of the test specimens is recorded. The specimens are then subjected to accelerated weathering (UV-B light and humidity) in a ® QUV/se tester (Q-Panel Lab Products) for 200 hours. After drying and storage for one hour at room temperature (20°C), the gloss of the specimen is measured again. The ratio of gloss after test to gloss before test is stated.

The following results have been obtained using these gelcoats in colour stability tests, as detailed below:

**Table 2 Results**

| Property | Gelcoat 1 | Gelcoat 2 | Gelcoat 3 |
|---|---|---|---|
| ΔE_{w} (7 Days, Water, 60 °C) | 2.2 | 3.0 | 0.7 |
| ΔE_{Cl} (16 Hours, Calcium Hypochlorite, 60 °C) | 22.5 | 6.3 | 0.5 |
| Pigment Segregation and Resin Tearing | good | good | good |
| Gloss Retention in Accelerated Weathering Test (60 °C, 180 h) | 80 % | 88 % | 97 % |

Pigment segregation was rated visually.

Gloss retention was measured with a Micro TRI-GLOSS device made by BYK Gardner, the percentage stated is the ratio of the gloss after and before the test.

Colour was masured using a 'Byk-Gardner color-view' apparatus. Colour change ΔE was calculated according to the standardised procedure.

As can be seen from the results, the individual contribution of replacing the organic pigment by an inorganic pigment provides a major contribution towards colour stability under the action of chlorinated water.

Likewise, the replacement of the common talc filler by an organically coated talc filler tends to lower the water bleaching. Still improved water bleaching stability is made possible by replacement of talc by alumina based fillers.

The combination of the inorganic pigment and an alumina based filler leads to a further increase in colour stability, by way of a synergistic action of the two inventive measures. All ΔE values usually tested have been reduced to below 1.0 by the combination of these two measures.
oOoOoOoOo

## Claims

1. Gelcoat formulations comprising an unsaturated polyester resin, a filler, and a coloured inorganic pigment.

2. Gelcoat formulations as claimed in claim 1 wherein the coloured inorganic pigment is based on at least one of cobalt aluminium spinel and cobalt chrome aluminium spinel.

3. Gelcoat formulations comprising an unsaturated polyester resin, a pigment and a filler which is based on aluminium oxide.

4. Gelcoat formulations as claimed in claim 3 wherein the filler is selected from the group consisting of kaolinite, corundum, aluminium oxide, aluminium trihydroxide, and boehmite.

5. Gelcoat formulations as claimed in claim 1 wherein the filler is based on aluminium oxide.

6. Gelcoat formulations as claimed in claim 1 wherein the filler particles are organically coated.

7. Gelcoat formulations as claimed in claim 5 wherein the pigment is based on at least one of cobalt aluminium spinel and cobalt chromium aluminium spinel, and the filler is selected from the group consisting of kaolinite, corundum, aluminium oxide trihydrate, and boehmite.

8. Gelcoat formulations as claimed in claim 7 wherein the filler comprises boehmite.
